# EUROPEAN PATENT APPLICATION

(11) **EP 3 228 914 A1**
(43) Date of publication of application: **11.10.2017**
(21) Application number: 16164191.5
(22) Date of filing: 07.04.2016
(51) Int. Cl.: F16L 5/00, H02G 3/22

(54) **A ROSETTE**

(71) Applicant: THUESEN & THUESEN A/S, 4440 Morkov (DK)
(72) Inventor: THUESEN, Jørgen, 4440 Mørkøv (DK)
(74) Representative: Holme Patent A/S

(57) **Abstract**

One-piece rosette (15) comprising a ring-shaped main body that is configurable from a pre-mounting state via an intermediate state to a mounted state, in which mounted state the rosette (15) is detachably mounted around a tubular structure (1) which projects from a base structure (2), the ring-shaped main body has a circumferential wall (14) that delimits a central opening (16) that surrounds the tubular structure (1) in said mounted state, which circumferential wall (14) has a radial width between the central opening (16) and an outer wall perimeter (12). The circumferential wall (14) has a first free wall end (8) and a second free wall end (9) opposite the first free wall end (8), which first free wall end (8) and second free wall end (9) are configured to overlap in the mounted state of the one-piece rosette (15).

## Description

The present invention relates to a one-piece rosette comprising a ring-shaped main body that is configurable from a pre-mounting state via an intermediate state to a mounted state, in which mounted state the rosette is detachably mounted around a tubular structure which projects from a base structure, the ring-shaped main body has a circumferential wall that delimits a central opening that surrounds the tubular structure in said mounted state, which circumferential wall has a radial width between the central opening and an outer wall perimeter.

In particular the present invention relates to a one-piece pipe rosette to be laid around installation pipes that rise out of the floor, wall or ceiling to cover oversized or untidy holes in the floor, wall or ceiling.

There exist numerous alternative pipe rosettes on the market in various materials and designs. The conventional materials are wood, solid stainless steel, or simply plastic.

Most pipe rosettes are closed rings. Other pipe rosettes are designed as two pieces, which are assembled and locked around the pipe later during retrofitting. The conventional designs and shapes are either completely flat or just slightly frustum-conical. Thus some known pipe rosettes can only be fitted around the pipe during installation of the pipes. Other known pipe rosettes can also be retrofitted later. The pipe rosettes of the present invention are particularly suited for retrofitting, and can be retrofitted on a tubular structure even though it is a one-piece object.

It is a main aspect of the present invention to provide an alternative to the conventional pipe rosettes.

It is yet an aspect of the present invention to provide a one-piece pipe rosette that can be mounted after the pipe installation has been finalized.

It is yet an aspect of the present invention to provide a one-piece pipe rosette that is versatile.

It is yet an aspect of the present invention to provide a one-piece pipe rosette that creates an aesthetic transmission between a pipe and a floor, wall or ceiling from which the pipe projects, thereby improving the overall aesthetics of the room.

It is yet an aspect of the present invention to provide a one-piece pipe rosette that is easy and fast to mount.

It is yet an aspect of the present invention to provide a rosette that is less expensive than conventional rosettes.

It is yet an aspect of the present invention to provide a rosette having a design that is not limited to certain specific pipe diameters.

The novel and unique whereby these and other aspects are achieved according to the present inventions consist in that the circumferential wall has a first free wall end and a second free wall end opposite the first free wall end, which first free wall end and second free wall end are configured to overlap in the mounted state of the one-piece rosette.

In the pre-mounting state the free wall ends delimit a radial gap in the circumferential wall, which gap can be adapted to enable the one-piece rosette to pass around the tubular structure, such as e.g. a radiator pipe or other kind of installation pipe which projects via a hole in a base structure, such as e.g. floor, wall or ceiling. Because the free wall ends are brought out of their common plane when overlapping the interconnection between said wall ends becomes slightly tensioned in the mounted state when the circumferential wall ring is closed, which makes the one-piece rosette to keep the mounted state and fit nicely around the tubular structure at all times to hide any gap between tubular structure and base structure. Conveniently e.g. a clearance between e.g. a floor and a radiator pipe arising from a too large pipe hole can be completely covered due to the overlapping free wall ends of the three-dimensional shape of the one piece rosette. These free wall ends can easily be separated again without the need of tools and when desired, e.g. to completely remove or just to replace the one-piece rosette. No special locking means is required nor mandatory for the overlapping free wall ends of the circumferential collar of the ring-shaped main body of the one-piece rosette to keep the mounted state of said one-piece rosette. Interconnection and coupling at the overlap can be purely self-locking due to special designs and construction.

The one-piece rosette can be provided in different colors that match different interior designs, which increases the need for replacement.

As mentioned above the ring-shaped main body is configured as a collar around the tubular structure, which collar has a slot or opening that facilitate achieving the different states of the rosette.

Within the scope of the present invention the terms "pre-mounting state", "intermediate state" and "mounted state" refers to a series of transformations and/or deformations which the rosette undergoes in order to be given various three-dimensional shapes in order to be mounted on the tubular structure. The "pre-mounting state" is the starting condition, e.g. the shape and structure at storage. The term "intermediate state" refers to the series of shape-modifying steps that the rosette undergoes until it is finally placed on the tubular structure and has reached the "mounted state", in which "mounted state" the free wall ends of the circumferential wall overlap.

The term "ring-shaped main body" shall not be construed as limited to circular main bodies. For example oval or polygonal main bodies are also within the scope of the present claims, provided the transformation from "pre-mounting state" to the "mounted state" is still possible.

The proper materials for the one-piece rosette of the present invention are the materials that allows this transformation to take place without negatively affecting the aesthetic appearance of the one-piece rosette in the mounted state, and without the one-piece rosette is given an undesired deformation that cannot be corrected and remedied appropriately to avoid visual impairment of the rosette in said mounted state or so that the one-piece rosette still can be arranged in the mounted state.

When the free wall ends overlap, the overlap results in application of radial force component(s) in the direction towards the tubular structure to close the central opening about said central opening, as well as the overlapping parts of the free wall ends tend to hold together due to radial and axial tension force components.

Due to the transformation that took place in the intermediate state where the first free wall end and the second free wall end were urged apart to open the gap between said free wall ends said overlapping free walls ends inherently urge towards each other in the mounted state thereby constituting an inherent lock without invading the material of the circumferential wall, e.g. by using screws, adhesives, clamps or snap-couplings.

Accordingly, the one-piece rosette is adapted and configured to be transformable and deformable to a certain extent so that the circumferential wall of the one-piece rosette during the intermediate state can be deformed from the pre-mounting state to increase the distance between the first free wall end and the second free wall end sufficiently to arrange the circumferential wall around the tubular structure and subsequently reverse this transformation and deformation and place the free wall ends in overlapping relationship in the mounted state.

To allow this transformation and deformation, the one-piece rosette may, as also stated above, be of a material that is sufficiently bendable and flexible to allow for said transformation and deformation to take place without initiating and occurrence of breaking or rupturing of the circumferential wall.

In the intermediate mounting state the first free wall end and the second free wall end can be spaced apart along the center axis of the one-piece rosette thereby increasing the axial distance between said free wall ends, contrary to completely or substantially enlarging the gap by spreading the free wall ends apart in a purely circumferential plane so as to just increasing the length of the overall perimeter of the ring-shaped main body. In the present invention the oversize of the gap between the free wall ends in the intermediate mounting state are in the main done by spreading the free wall ends axially and thereby arranging the first free wall end axially above the second free wall end. In the present context the term "above" is meant to refer to the distance from the perimeter of the circumferential wall, which e.g. means that when the such deformed circumferential wall is in the intermediate mounting state for being placed on the tubular structure the first free wall end is farthest away from the base structure.

In the specific embodiment wherein the tubular structure is a pipe rising from a hole in the floor the first free wall end is the free wall end above the floor in both the pre-mounting state and the intermediate mounting state.

In the mounted state wherein the first free wall end also overlap the second free wall end, the first free wall end may be below the second free wall end, in which case the first free wall end is the end of the circumferential wall in contact with the base structure. Thus in the mounted state the axial order of the overlapping free wall ends have been reversed from the positions in the pre-mounting state, in which pre-mounting state the first free wall end was on top of the second free wall end or at least axially above the first free wall end.

The thickness of the circumferential wall is preferably so small that the combined thickness at the overlapping areas of the circumferential wall is as low as possible. The appropriate thickness of the circumferential wall may be relevant in order to provide the one-piece rosette with the necessary proper transformation properties and to preserve any shape resulting from a structural, dimensional transformation when needed to go through the transformations states. The proper thickness is selected to allow the distance between the free wall ends to be flexed to increase the distance between said free wall ends during the transformation and deformation of the intermediate mounting state, to allow the tubular structure to pass between said spaced apart free wall ends. The selected material and the thickness of the circumferential wall should also have a structural integrity in the mounted state that allows the one-piece rosette to stand by itself around the tubular structure, so that the free walls ends self-lock in overlapping relationship. When the free wall ends overlap in the mounted state substantially the entire perimeter of the circumferential wall may rest on the base structure, in most situations also at the overlap.

The preferred shape of the one-piece rosette is a frustum-cone where the base of the frustum-cone is defined along the perimeter, and the central opening are defined at the top of the frustrum-cone. Preferably the shape of the one-piece rosette is both frustum-conical in the pre-mounting state and in the mounted state.

Advantageously the free wall ends may have opposite bendings curving away from each other in the pre-mounted state and to self-interlock due to compression forces when overlapping in the mounted state. Thus simply by virtue of bending the free wall ends of the ring-shaped main body of the one-piece rosette can be given a strong self-locking property. The bendings are subjected to the oppositely directed compressive forces of the reversely ordered free walls end in the mounted state, and may tend to be at least partly straightened out by these compression forces.

In a preferred embodiment at least one of the corners of at least one of the free wall ends are rounded so that no sharp corners can scratch the tubular structure during mounting the one-piece rosette. The rounded corners also reduce the risk of cutting the fingers while changing the one-piece rosette shape from the pre-mounting state into the intermediate state, as well as when the free wall ends are brought into overlapping relationship to finally achieve the mounted state. In a preferred embodiment all corners at the free wall end are rounded as well as the free wall end edges may be without sharp edges.

The most frequent use of the one-piece rosette is as a pipe rosette for a radiator pipe wherein the base structure simply is a floor.

The frustum-conical shape may be obtained from a flat rosette blank that is subjected to a pressing step, a drawing step, or other kind of shaping step, e.g. using a mandrel or patrice, in which the circumferential wall is given at least an inclination from the central opening towards the perimeter, and optionally also the appropriate bendings. The diameter of the initial central opening of such a blank is larger than the diameter of the central opening of the frustum-conical one-piece rosette, which latter diameter is selected in accordance with the diameter of the tubular structure the one-piece rossete is intended used for. So the diameter of the central opening of the frustum-conical one-piece rosette is smaller than the diameter of the initial central opening of the blank, and can even be slightly smaller than the diameter of the tubular structure which it shall surround in order to fit closely and clamp better around said tubular structure. The central opening in smaller than the perimeter of the circumferential wall in any state due to the collar width, thus due to the radial width of the circumferential wall. The length of the perimeter of a circle taken along the perimeter of the blank is normally also longer than the length of the perimeter of the circumferential wall in the pre-mounting state and always longer than the length of the perimeter of the circumferential wall in the mounted state.

The degree of inclination may vary according to the intended use, but is always a positive inclination seen in relation to the longitudinal axis of the tubular structure, and thus also seen in relation to the center axis of the one-piece rosette. The inclination and the radial width are two parameters relevant to the size of the hole that need to be covered. In some implementations also the available axial space above the rosette must be considered. The smaller the angle of inclination the wider a hole or clearance can be covered. The wider the circumferential wall is the wider a hole or clearance can be covered.

The size of the overlap of the free wall ends may also depend on the annular length of the circumferential wall. The size of the overlap is preferably as small as possible so that the one-piece rosette is easy to mount and demount. An overlap of between 1 - 2 mm is acceptable and may be preferred for 12 - 15 mm diameter pipes, however larger overlap may work better for larger pipe diameters. The above given overlap sizes should therefore not be construed as exhaustive for the one-piece rosette of the present invention.

Accordingly, the blank can be made from a flat metal sheet material that is machined or otherwise processed into the pre-mounting state, or the one-piece rosette can be molded into the pre-mounting state.

In case of a molded one-piece rosette, the one-piece rosette is preferably molded of a plastic polymer having transformation and deformation properties allowing the one-piece rosette to be deformed into the intermediate state in a manner similar to when a one-piece rosette is punched or cut from a thin metal sheet or a thin plastic sheet. The thin sheet can e.g. be a thin aluminium sheet or steel sheet that allows further working and processing of the blank to obtain the frustum-conical one-piece rosette having free wall ends adapted to overlap slightly, such as agouti 1-2 mm for small diameter pipes, irrespective of which free end is on top of the other. Suitable workable plastic sheets can e.g. be a medium high density polyethylene sheet which is heat deformed from the blank state to the pre-mounting state and cured. The named metals and plastic polymers are only examples and should not be construed as limiting the scope of the present invention.

A further advantage of manufacturing thin rosettes, instead of e.g. heavy cast rosettes, is that the consumer may be able to customize the size, e.g. by cutting a secant piece or angular segment to promote better fitting in narrow areas.

In the same or in a different embodiment the opposite free wall ends may have opposite flaps and incisions for circumferential coupling together the free wall ends in overlapping relationship, and to also apply a circumferential tension in addition to the radial and axial compression to constitute an additional locking means. The free wall ends still overlap and the combined wall thickness at the overlapping free wall ends. This modified embodiment can be made of even further materials, such as cardboard, due to the extra self-locking means, and the modified embodiment may be preferred for temporary purposes and short term uses.

The pipe rosettes of the present invention are thus designed to cover the gap in the wall or floor around e.g. a 12 or 15 mm radiator pipe and can be added after pipe installation to perfect and complement the room design.

The special design and construction of the one-piece rosette are the main features responsible for holding the ring-shape of the one-piece rosette around the pipe.

In a preferred embodiment the free wall ends have opposite bendings curving away from each other. The first free wall end can thus have a first bending facing upwards towards the central opening and the second free wall end have a downwards bending facing toward the perimeter of the central wall in the pre-mounting state, thus away from the central opening. The curvatures of the bendings may vary. Bending degree may e.g. be about 2-5° at a bending radius of between 2 - 5 mm starting from a free wall end.

So when the free wall ends are brought into the mounted state their axial positions are swapped or reversed axially, just as for the previously described embodiments, whereby the one-piece rosette self-locks at the overlap simply due to the given design and construction.

Thus for all embodiments of the present invention the first free wall end and the second free wall end are configured to overlap in the mounted state of the one-piece rosette and the axial order of said first free wall end and said second free wall end which is reversed in relation to the axial order these ends where in in the pre-mounting state.

The invention also suggests a solution to cover gapping around closely placed pipes by means of the one-piece rosette according to the present invention.

The invention also relates to a method of mounting a one-piece rosette of the above-described kind.

The method comprises the steps of
- providing the one-piece rosette,
- transforming and/or deforming the one-piece rosette from the pre-mounting state in the intermediate state,
- moving the central opening to surround the tubular structure, and
- arranging the first free wall end and the second free wall end in overlapping relationship to achieve the mounted state, preferably in swapped overlapping relationship.

Above the free wall ends are referred to and discussed as "the first free wall end" and "the second free wall end". This numbering should not be construed as limiting the present invention, within the scope of which the first free wall end quite as well can appear and function as the second free wall end; thus the person skilled in the art knows that the function and location of these free wall ends can be reversed at the various states.

Emphasis is made the irrespective of the embodiment the axial order of the first free wall end and the second free wall end are swapped when undertaking the transformation from the pre-mounting state to the mounting states.

The invention will now be described with references to the accompanying drawing in which,
fig. 1 shows a fragment of a pipe rising from a fragment of a floor,
fig. 2 shows, in perspective slightly from above, a blank for a first embodiment of a one-piece rosette,
fig. 3a shows, in perspective, a first embodiment of a one-piece rosette in a pre-mounting state and manufactured of the blank seen in fig. 2,
fig. 3b shows a second embodiment of a one-piece rosette in a pre-mounting state and manufactured of the blank seen in fig. 2,
fig. 4 illustrates how the first and second embodiments of a one-piece rosette seen in figs. 3a and 3b, respectively, are being transformed from the pre-mounting state to the intermediate mounting state,
fig. 5 shows the mounted state of a one-piece rosette according to the invention,
fig. 6 shows a blank for a third embodiment of a one-piece rosette,
fig. 7 shows a one-piece rosette made of the third embodiment of a blank seen in fig. 6 and in a mounted state, and
fig. 8 shows an arranging with a cover plate between two adjacent pipes sharing a common hole in the floor for being used with two one-piece pipe rosettes.

Below the invention is described under the assumption that the tubular structure is a pipe rising from a floor. The pipe can however quite as well project from a wall or a ceiling or any other base, and the pipe be associated with any installation, including sanitary installation and heating systems.

The hole in the floor wherefrom the pipe rises is covered by the inclined circumferential wall of the one-piece rosette in the mounted state, so said hole cannot be seen in the figures of rosettes in mounted state.

Emphasis is made that the circumferential wall preferably is inclined. This is however not mandatory, although often preferred. Flat embodiments wherein the circumferential wall lays flat on the floor are within the scope of the present invention as long at the free wall ends overlap. The central opening is selected to fit closely around the pipe and the radial width of the circumferential wall is selected to span any gap between the pipe and the adjacent floor around the hole for the pipe.

The pipe is shown to have a circular cross-section. Within the scope of the present invention the rosette can be designed for tubular structures of any cross-section including squares, polygonal, oval, elliptic, etc. The initial opening of the blank and the central opening of the rosette is thus simple configures correspondingly to receive such a tubular structure and be surround this tubular structure without leaving a noticeable clearance.

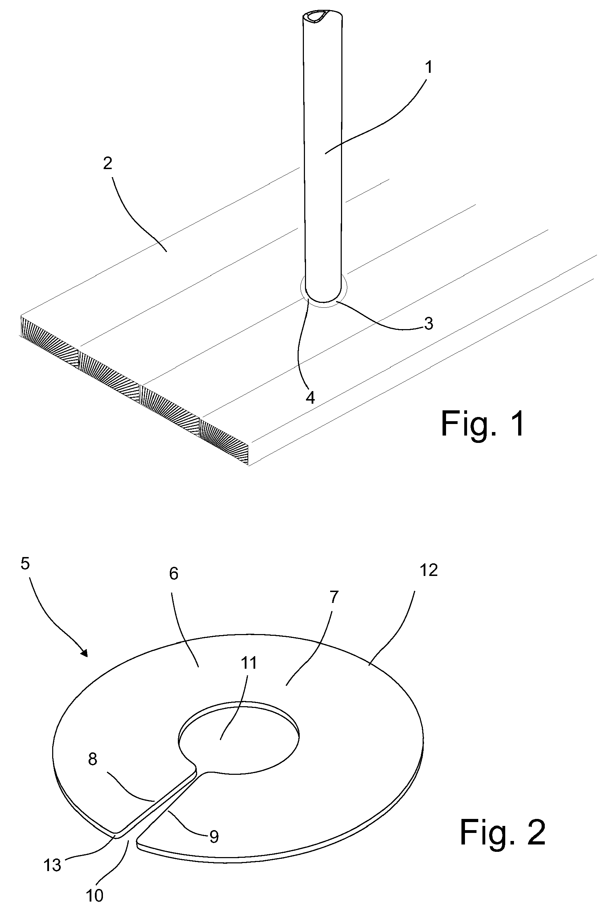

Fig. 1 shows a fragment of a pipe 1 rising from a fragment of a floor 2 via a hole 3 in said floor 2. There is a clearance 4 between the pipe 1 and the hole 3 due to the hole 3 has a diameter that is larger than the diameter for installation conveniences. This clearance 4 is intended covered by a rosette of the present invention as illustrated in the following figures.

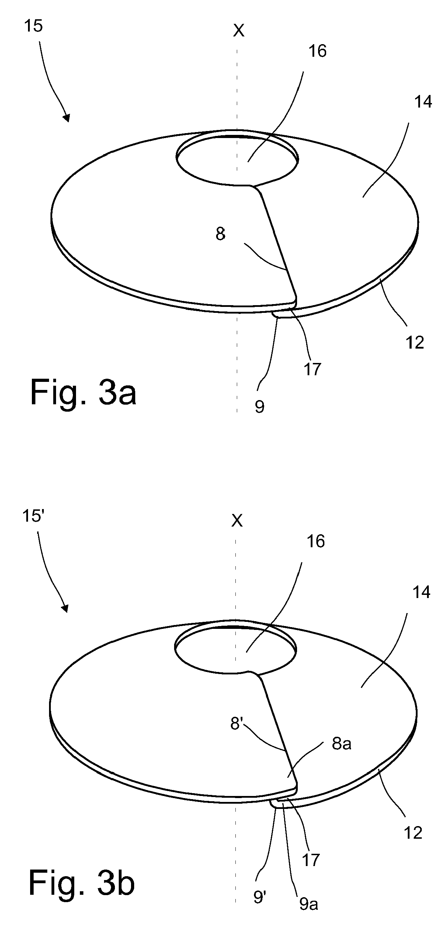

Fig. 2 shows a blank 5 for a first embodiment of such a one-piece rosette. The blank 5 is flat, and the sole structural component in the present embodiment is an open ring 6 in form of a collar 7 that has opposite facing adjacent free wall ends 8,9 that delimit a radially extending gap 10 in the collar 7. The blank 5 has an initial central opening 11 in the same plane as the ring 6, and the corners 13 of the free wall ends 8,9 are rounded. This open ring 6 becomes the ring-shaped main body that constitutes the circumferential wall 14, once this collar 7 of the blank 5 is made into the pre-mounting state of the rosette 15,15', of which the exemplary first embodiment of a rosette 15 and the exemplary second embodiment of a rosette 15' are seen in respective figs. 3a and 3b. For the first embodiment of a rosette 15 and for the second embodiment of a rosette 15' the same reference numerals are generally used for like parts.

In the pre-mounting states shown in figs. 3a and 3b the circumferential wall 14 has been given an inclination from a central opening 16. Thus the central opening 16 have been raised above floor level. During this transformation from the blank 5 to the pre-mounting state the size of the initial central opening 11 has been reduced to the size of central opening 16 seen in figs. 3a and 3b.

In order to achieve the pre-mounting state of a first embodiment of a rosette 15 seen in figs. 3a the blank 5 has been given a frustum-conical shape with a central opening 16, a circumferential wall 14, and having overlapping first free wall end 8 and second free wall end 9. The outer circumferential wall perimeter 12 is reduced corresponding to the overlap 17. The center axis of the rosette 15 is indicated by reference numeral X.

The first free wall end 8 overlaps the second free wall end 9 so that the first free wall end 8 is above the second free wall end 9 in a substantially flat abutting condition. The overlapping could just as well be opposite in the pre-mounting state, so that the first free wall end 8 is below the second free wall end 9 instead.

In order to achieve the pre-mounting state of the second embodiment of a rosette 15' seen in fig. 3b the blank 5 has been given a frustum-conical shape with a central opening 16, a circumferential wall 14, and having overlapping first free wall end 8' and second free wall end 9'. The outer circumferential wall perimeter 12 is reduced corresponding to the overlap 17. The center axis of the rosette 15' is indicated by reference numeral X.

The second embodiment of a rosette 15' seen in fig. 3b however differs slightly from the first embodiment of a rosette 15 seen in fig. 3a in that the first free wall end 8' has a small upwards bending 8a in the upwards direction of the axis X, when seen in the orientation shown in fig. 3b. Similarly the second free wall end 9' has a small bending 9a, however a downwards bending 9a in the downwards direction of the axis X, when in the orientation shown in fig. 3b. The bending orientations of the upwards bending 8a, and the downwards bending 9a can be reversed, so that the bending of the first free wall end 8' faces downwards and the bending of the second free wall end 9' faces upwards instead.

In a modified embodiment just one of the free wall ends 8',9' may posses a bending. The bendings 8a,9a increase the coupling contact and coupling force at the overlap 17.

Accordingly, in any of the first embodiment 15 or the second embodiment 15' of a rosette of the present invention one free wall end is above the other in the pre-mounting state, and this order is reversed in the mounting state so that the rosette 15,15' holds firmly together around the pipe 1 exclusively due to the inherent design and construction of said rosette. The overlapping could be arranged opposite in the pre-mounting state, so that the first free wall end 8,8' is below the second free wall end 9,9' instead

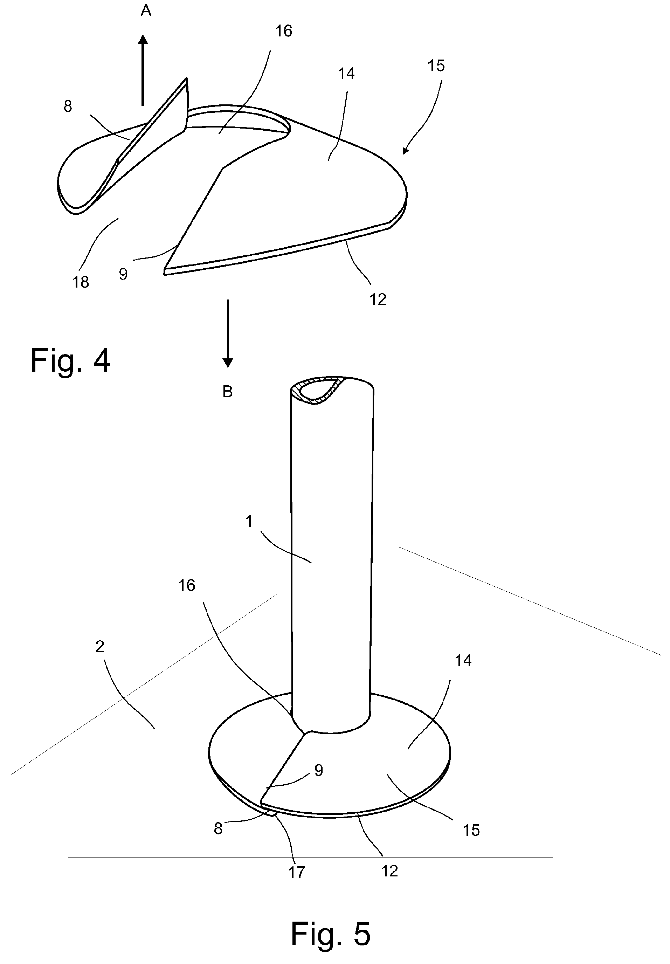

Fig. 4 shows the first embodiment of a one-piece rosette 15 seen in fig. 3a transformed in the intermediate mounting state, wherein the first free wall end 8 and the second free wall end 9 have been spaced apart, as indicated by opposite directed arrows A,B, to create an enlarged gap or slot 18 that provides good access to the central opening 16 to allows the one-piece rosette 15 to pass over the pipe 1, e.g. by a sideways movement towards and across the pipe 1. It should be noted that although the pipe 1 has a free upwards facing end in fig. 1, this is only for illustrative purposes, and that in normal installation the pipe 1 is connected to another system, such as a water circulation system, a radiator, etc., which makes it impossible to pass a conventional rosette or even a closed one-piece rosette 15 over the top or on a free end of the pipe 1.

The second embodiment of a one-piece rosette 15' seen in fig. 3b is transformed in the intermediate state in a similar manner.

Fig. 5 illustrates the mounted state of any of the first embodiment of a one-piece rosette 15 or the second embodiment of a one-piece rosette 15' according to the present invention and wherein the rosette has been mounted on the pipe 1 so that the central opening 16 fits nicely around the pipe 1. For the purpose of clarity of fig. 5 only the reference numeral of the first embodiment are inserted in fig. 5.

The first free wall end 8; 8' is now brought below the second free wall end 9; 9' and locks these wall ends together so that the circumferential wall 14 now defines a closed self-locking collar 7 around the pipe 1. The frustum-conical shape provides an inclination of the circumferential wall 14 from the central opening 16 towards the outer wall perimeter 12 that rests on a base structure in form of a floor 2. The inclination can e.g. be between 10° - 45° in relation to the center axis X of the rosette 15;15', and to the longitudinal axis of the pipe 1. For a 12 mm pipe the blank 5 for a rosette of the present invention may have an angular spacing between the first free wall end and the second free wall end of e.g. 6° to achieve an appropriate overlap in the pre-mounting state and in the mounted state.

For the second embodiment the upwards first bending 8a are brought below the downwards second bending 9a to provide further strength and compression force to the overlap 17 due to the now substantially straightened bendings 8a,9a attempting to counteract the force applied to them due to the overlap 17.

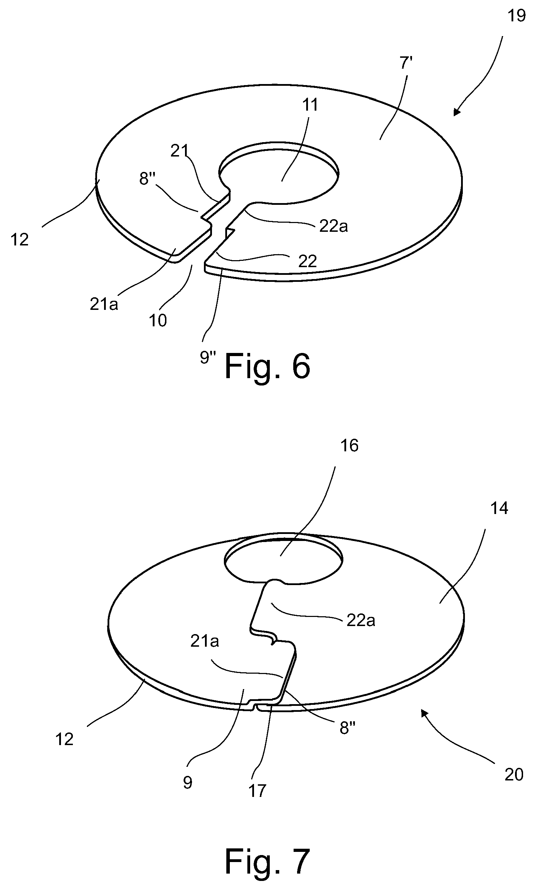

Fig. 6 shows a second embodiment of a blank 19 for a third embodiment of a one-piece rosette 20 according to the present invention, as seen in the mounted state in fig. 7.

The second embodiment of a blank 19 and the third embodiment of a rosette 20 corresponds substantially to the previously described embodiments and for like parts same reference numerals are used.

The second embodiment of a blank 19 differs from the first embodiment of a blank 5 in that the free wall ends 8" ,9" have incisions 21,22. The first wall end 8" has an inner incision 21 extending from the initial central opening 11 about half way into the collar 7' to define a circumferential outer flap 21a. The second free wall end 9" has an outer incision 22 that extends from the outer wall perimeter 12 of the collar 7' about half the way into the radial width of the collar 7' to define a circumferential inner flap 22a.

To lock the free wall ends 8" ,9" together in overlapping relationship in achieving the mounted state seen in fig. 7 the inner flap 22a are brought above the circumferential wall 14 at the inner incision 21, and the outer flap 21a is brought above the circumferential wall 14 at the outer incision 22.

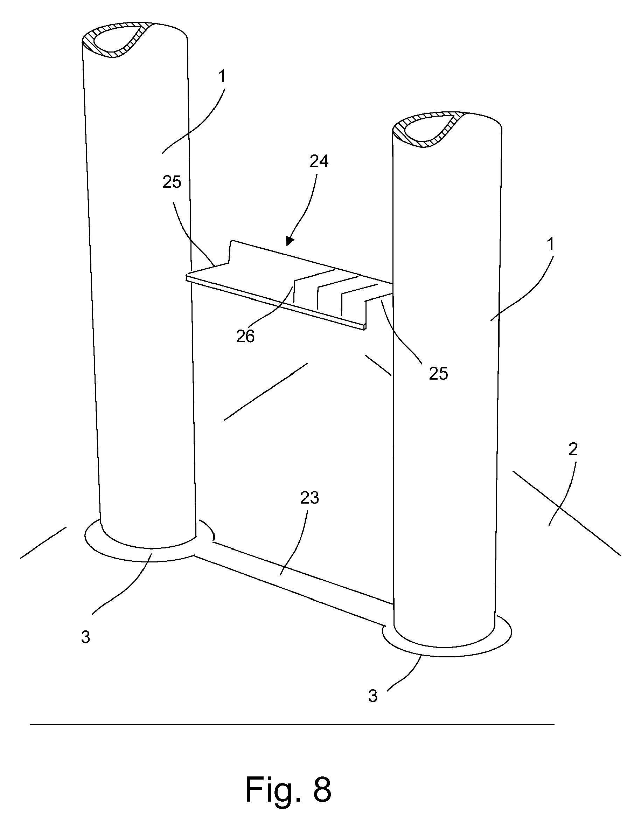

Fig. 8 shows a common pipe installation with two adjacent pipes 1 passed through holes 3 in the floor 2. The carpenter has left a disfiguring cut-out track 23 between the two holes 3. A cover plate 24 is provided to hide this track 23 below rosettes (not shown. The cover plate 24 has V-shaped free ends 25 and markings 26 to facilitate cutting the cover plate 24 to an appropriate length that fits between the pipes 1 so that it can be hidden below the subsequently mounted rosettes (not shown).

In both the pre-mounting state and in the mounted state the circumferential wall 14 of the rosettes 15,15',20 posses a springy nature that provides the tensioning of the rosette around the tubular structure and the compression together of the free wall ends at the overlap. The preferred material for the rosette may be the same as for the one-piece rosette, including aluminium and steel, e.g. a 1 mm aluminium sheet or steel sheet. Aluminium is lightweight, easy to process, and easy to manipulate between the various states of the present invention. Cutting, if needed, can often be made by a common scissor.

The cover plate can advantageously be made of the same materials as the rosette, preferably the cover plate is so thin that the rosette are not lifted noticeable from the floor.

## Claims

1. A one-piece rosette (15;15';20) comprising a ring-shaped main body (6) that is configurable from a pre-mounting state via an intermediate state to a mounted state, in which mounted state the rosette (15;15';20) is detachably mounted around a tubular structure (1) which projects from a base structure (2), the ring-shaped main body (6) has a circumferential wall (14) that delimits a central opening (16) that surrounds the tubular structure (1) in said mounted state, which circumferential wall (14) has a radial width between the central opening (16) and an outer wall perimeter (12), **characterized in that** the circumferential wall (14) has a first free wall end (8;8';8") and a second free wall end (9; 9'; 9") opposite the first free wall end (8;8';8''), which first free wall end (8;8';8'') and second free wall end (9; 9'; 9'') are configured to overlap in the mounted state of the rosette (15;15';20).

2. A one-piece rosette (15;15';20) according to claim 1, **characterized in that** in the intermediate state of the one-piece rosette (15;15';20) the circumferential wall (14) is transformed and/or deformed from the pre-mounting state to increase the distance between the first free wall end (8; 8'; 8'') and the second free wall end (9;9'; 9'').

3. A one-piece rosette (15;15';20) according to claims 1 or 2, **characterized in that** in the intermediate mounting state the first free wall end (8;8';8" ) and the second free wall end (9; 9'; 9'') are made spaced apart along the center axis (X) of the one-piece rosette (15;15';20).

4. A one-piece rosette (15;15';20) according to claims 1, 2 or 3, **characterized in that**
- in the pre-mounting state the first free wall end (8; 8'; 8'') overlaps the second free wall end (9; 9'; 9'') so that the first free wall end (8;8';8" ) is above the second free wall end (9;9';9"), and
- in the mounted state the first free wall end (8; 8'; 8'') overlaps the second free wall end (9; 9'; 9") in reversed axial order in relation to the pre-mounting state so that the first free wall end (8; 8'; 8'') is below the second free wall end (9; 9'; 9") in the mounted state.

5. A one-piece rosette (15;15';20) according to any of the preceding claims 1 - 4, **characterized in that** the one-piece rosette (15;15';20) is a frustum-cone.

6. A one-piece rosette (15;15';20) according to any of the preceding claims 1 - 5, **characterized in that** the free wall ends (8,9;8'9';8'',9'') have opposite bendings (8a,9a) curving away from each other in the pre-mounted state, optionally at least one of the corners (13) of at least one of the free wall ends (8,8',8'';9,9',9'') is rounded.

7. A one-piece rosette (15;15';20) according to any of the preceding claims 1 - 6, **characterized in that** the one-piece rosette (15; 15' ; 20) is made from a blank (5,19) of a flat sheet material that is processed into the pre-mounting state.

8. A one-piece rosette (15;15';20) according to any of the preceding claims 1 - 7, **characterized in that** the one-piece rosette (15;15';20) is made of a metal.

9. A one-piece rosette (15;15';20) according to any of the preceding claims 1 - 8, **characterized in that** the one-piece rosette (15;15';20) is molded into the pre-mounting state, preferably molded of a plastic polymer having deformation property allowing the one-piece rosette (15;15';20) to be transformed and/or deformed in the intermediate state and allowing reversal an axial order of the free wall ends (8,8',8'';9,9',9'') when being arranged in overlapping relationship.

10. A one-piece rosette (15;15';20) according to any of the preceding claims 1 - 9, **characterized in that** the one-piece rosette (15;15';20) is a one-piece rosette (15;15';20) for a radiator pipe (1) and the base structure is a floor (2), wall or ceiling.

11. A one-piece rosette (15;15';20) according to any of the preceding claims 1 - 10, **characterized in that** the free wall ends (8" ;9" ) have respective mating incisions (21,22) and flaps (21,22a) for coupling into overlapping relationship.

12. A one-piece rosette (15;15';20) according to any of the preceding claims 1 - 11, **characterized in** further comprising a cover plate (24) for covering a cut-out (23) between two adjacent tubular structures (1) provided with rosettes (15;15';20).

13. A method of mounting a one-piece rosette (15;15';20) according to any of the preceding claims 1 - 12, **characterized in that** the method comprises the steps of
- providing the one-piece rosette (15;15';20),
- transforming and/or deforming the one-piece rosette (15;15';20) from the pre-mounting state into the intermediate state,
- increasing the gap (10,18) between the opposite free wall ends (8,8',8";9,9',9") and moving the central opening (16) to surround the tubular structure (1), and
- arranging the first free wall end (8; 8'; 8'') and the second free wall end (9;9';9'') in overlapping relationship, preferably in reversed overlapping relationship.

14. A method of mounting a one-piece rosette (15;15';20) according to claims 13, **characterized in that** the method comprises the further step of modifying the outer circumferential wall perimeter (12) by cutting.

15. Use of the one-piece rosette (15;15';20) according to any of the preceding claims 1 - 12 as a radiator rosette (15;15';20).
